# EUROPÄISCHE PATENTSCHRIFT

(11) **EP 1 144 829 B1**
(45) Veröffentlichungstag und Bekanntmachung des Hinweises auf die Patenterteilung: **04.03.2009**
(21) Anmeldenummer: 00974335.2
(22) Anmeldetag: 28.09.2000
(51) Int. Cl.: G01N 27/407

(54) **VERFAHREN ZUM BETRIEB EINER MISCHPOTENTIAL-ABGASSONDE UND SCHALTUNGSANORDNUNGEN ZUR DURCHFÜHRUNG DER VERFAHREN**
METHOD FOR OPERATING A MIXED POTENTIAL EXHAUST SENSOR AND CIRCUIT CONFIGURATIONS FOR CARRYING OUT SAID METHOD
PROCEDE D'EXPLOITATION D'UNE SONDE DE GAZ D'ECHAPPEMENT A POTENTIEL MIXTE ET CIRCUITS POUR METTRE LEDIT PROCEDE EN OEUVRE

(30) Priorität: 30.09.1999 DE 19947240
(43) Veröffentlichungstag der Anmeldung: 17.10.2001
(73) Patentinhaber: ROBERT BOSCH GMBH, 70442 Stuttgart (DE)
(72) Erfinder: MUELLER, Bernd, 28790 Schwanewediz-Aschwaden (DE); BRINZ, Thomas, 73266 Bissingen unter der Teck (DE); SCHUMANN, Bernd, 71277 Rutesheim (DE); BLOEMER, Bernhard, 70435 Stuttgart (DE)
(74) Vertreter: Jakelski, Joachim
(86) Internationale Anmeldenummer: PCT/DE2000/003384
(87) Internationale Veröffentlichungsnummer: WO 2001/023730

(56) Entgegenhaltungen:
- EP-A- 0 862 056
- DE-A- 19 734 860
- GB-A- 2 119 933
- US-A- 5 344 548
- US-A- 5 630 920

## Beschreibung

### Stand der Technik

Die Erfindung betrifft Schaltungsanordnungen zum Betreiben einer Mischpotenzial-Abgassonde .

Mischpotenzial-Abgassonden werden beispielsweise als Gassensoren zur Erfassung der Kohlenwasserstoffkonzentration der Brennkraftmaschine oder als NOx-Sonden zur Erfassung des Stickoxidanteils im Abgas von Brennkraftmaschinen eingesetzt.

Diese sind im Aufbau den λ-Sonden ähnlich und gehen beispielsweise aus Bosch "Kraftfahrtechnisches Taschenbuch" 22. Auflage, 1995, Seiten 490 ff hervor.

Bei bekannten Mischpotenzial-Abgassonden wird das Signal als Spannung zwischen zwei Elektroden, über den Kurzschlussstrom zwischen den Elektroden oder durch Abgreifen der zwischen den Elektroden messbaren und an einem Widerstand abfallenden Spannung gemessen.

Eine Abgassonde zur Messung der Komponenten in einem Abgas und deren Beschaltung geht beispielsweise aus der EP 0 862 056 A1 hervor.

Aufgabe der Erfindung ist es, Schaltungsanordnungen zu vermitteln, durch die bei technisch einfachem Aufbau und einer möglichst geringen Zahl von Bauteilen Mischpotenzial-Abgassonden mit einer möglichst hohen Selektivität gegenüber den einzelnen Komponenten des Abgases, auch bei Vorhandensein von teilweise sehr großen Querempfindlichkeiten betrieben werden können.

### Vorteile der Erfindung

Diese Aufgabe wird durch Schaltungsanordnungen mit den Merkmalen der Ansprüche 1 und 2 gelöst.

Eine spannungspolarisierte Strommessung, d.h. eine Messung des an den Elektroden der Mischpotenzial-Abgassonde abfallenden Stroms bei konstanter äußerer Spannung ist auf technisch sehr einfache Weise durch einen invertierenden Operationsverstärker, an dessen nicht invertierendem Eingang ein Spannungsteiler und an dessen invertierendem Eingang eine der Elektroden der Abgassonde angeschlossen sind und in dessen Rückkoppelkreis ein Referenzwiderstand angeordnet ist, realisierbar.

Eine strompolarisierte Spannungsmessung, d.h. eine Messung der sich zwischen den Elektroden einstellenden Spannung bei Beaufschlagung der Sondenkeramik mit einem konstanten Strom wird auf technisch einfach zu realisierende Weise durch einen nicht invertierenden Operationsverstärker ermöglicht, an dessen nicht invertierendem Eingang ein Spannungsteiler, an dessen invertierendem Eingang ein Referenzwiderstand und in dessen Rückkoppelkreis der Abgassensor angeordnet sind.

Bei einer vorteilhaften Ausführungsform ist ein Schaltmittel vorgesehen, durch das zwischen den beiden Schaltungsanordnungen umschaltbar ist.

### Zeichnung

Weitere Vorteile und Merkmale der Erfindung sind Gegenstand der nachfolgenden Beschreibung sowie der zeichnerischen Darstellung von Ausführungsbeispielen der Erfindung.

In der Zeichnung zeigen:
- Fig. 1: eine aus dem Stand der Technik bekannte Abgassonde mit gepumpter Referenz;
- Fig. 2: die an einer polarisierten NOx-Mischpotenzialsonde abgreifbare Sondenspannung über der Zeit und
- Fig. 3: die HC-Querempfindlichkeit über der Pumpspannung bei einer von der Erfindung Gebrauch machenden Mischpotenzial-Abgassonde;
- Fig. 4: ein Ausführungsbeispiel einer erfindungsgemäßen Schaltungsanordnung zur spannungspolarisierten Strommessung einer Mischpotenzial-Abgassonde und
- Fig. 5: ein Ausführungsbeispiel einer erfindungsgemäßen Schaltungsanordnung zur strompolarisierten Spannungsmessung.

### Beschreibung der Ausführungsbeispiele

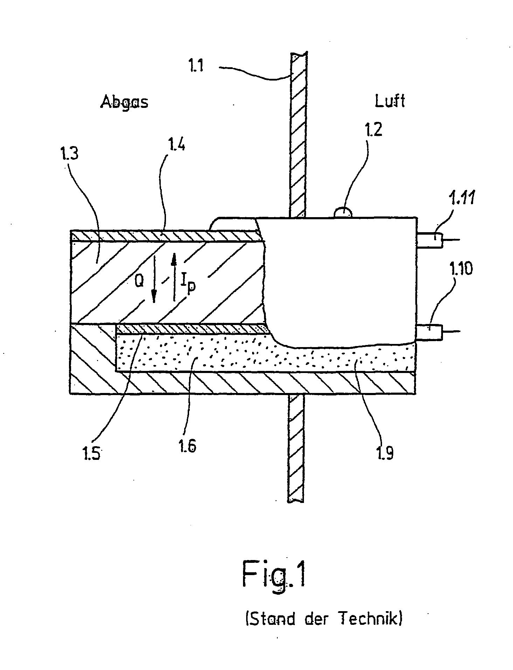

Fig. 1 zeigt im Schnitt eine Abgassonde 1.2 an einem Abgasrohr, von dem eine Wand 1.1 dargestellt ist. Diese Wand 1.1 trennt das Abgas einer Brennkraftmaschine (links) von der Umgebungsluft (rechts). Die Abgassonde 1.2 weist in ihrem abgasseitigen Teil einen Festelektrolyten 1.3 zwischen einer dem Abgas ausgesetzten ersten Elektrode 1.4 und einer weiteren Elektrode 1.5 auf. Ein mit der Elektrode 1.5 in Verbindung stehendes Referenzgasvolumen 1.6 steht mit der Umgebungsluft über einen Kanal 1.9 in direktem Kontakt. Die Elektrode 1.5 ist mit einer Messzuleitung 1.10 verbunden, die Elektrode 1.4 mit einer Messleitung 1.11.

Für die Aufrechterhaltung einer stabilen Referenzgasatmosphäre ist es wesentlich, dass die Zufuhr mit Sauerstoff durch den Pumpstrom Ip im zeitlichen Mittel die auftretenden Verluste an Sauerstoff übertrifft. Solche Verluste treten durch die Messung einer Spannung in den Elektroden zwangsweise dann auf, wenn die Spannungsmessung auf eine Strommessung auf an sich bekannte Weise über einen Messwiderstand zurückgeführt wird. Im Bereich der Messung von Spannungen in der Größenordnung der Ausgangsspannung der Abgassonde von 1V werden typischerweise Messwiderstände im MegaohmBereich verwendet. Als Folge fließt ein Messstrom im Mikroampère-Bereich. Für Elektrolyten wird dieser Strom von Sauerstoffionen aus dem Referenzgasvolumen getragen, so dass sich die Sauerstoffkonzentration im Referenzgasvolumen durch die Messung verringert.

Ein Messimpuls kann nun bezüglich seiner Höhe und zeitlichen Ausdehnung so bemessen werden, dass er im zeitlichen Mittel den erforderlichen Pumpstrom liefert.

Die Grundidee der vorliegenden Erfindung ist es nun, eine Verbesserung der Gasselektivität dadurch zu erreichen, dass an die Sensorelektroden 1.4, 1.5 ein konstantes äußeres Potenzial oder ein konstanter äußerer Strom angelegt werden. Hierdurch kann die Signalbildung auf einzelne Gase gewissermaßen eingestellt und so die Selektivität verbessert werden. Wird ein konstantes äußeres Potential, d.h. eine konstante äußsere, von der thermodynamischen Gleichgewichtsspannung abweichende Spannung angelegt, wird der sich dabei einstellende Strom gemessen und ausgewertet. Wird ein konstanter Strom angelegt, erfolgt die Messung und Auswertung des sich dabei einstellenden Potentials oder der sich dabei einstellenden Spannung.

Es ist insbesondere möglich, durch Anlegen einer Spannung, die über der thermodynamischen Gleichgewichtsspannung der störenden Elektrodenreaktion liegt, den Verlauf der störenden Reaktion so zu beeinflussen, dass keine störenden Komponenten an der gewünschten Reaktion teilnehmen.

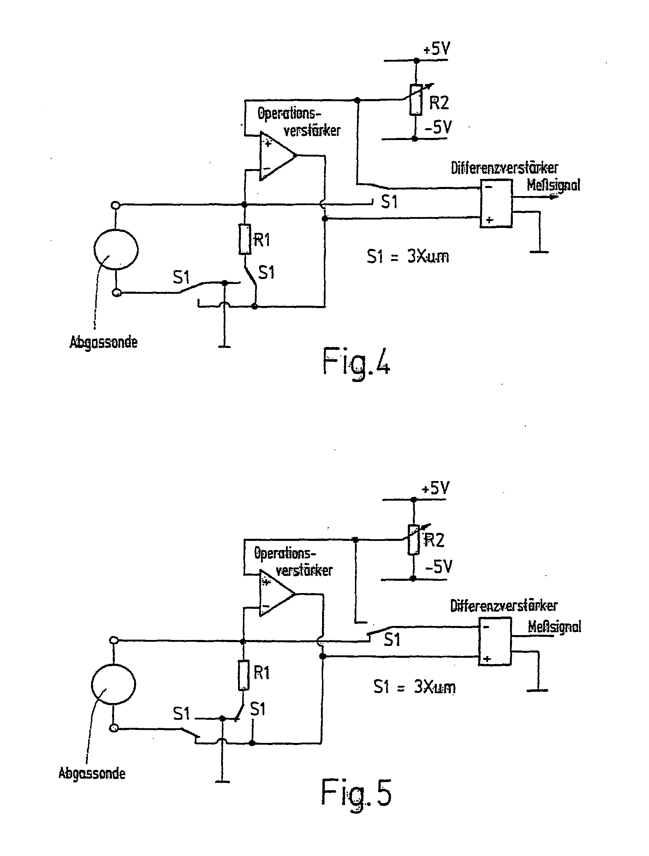

In Fig. 4 ist ein Ausführungsbeispiel einer Schaltungsanordnung zur spannungspolarisierten Strommessung, bei der man an die Elektroden 1.4, 1.5 der Abgassonde eine konstante äußere, von der thermodynamischen Gleichgewichtsspannung abweichende Spannung anlegt und den über die Elektroden 1.4, 1.5 abfallenden Strom misst und auswertet. Die Schaltung umfasst einen Operationsverstärker, in dessen Rückkoppelkreis, d.h. zwischen seinem invertierenden Eingang und seinem Ausgang ein Referenzwiderstand R1 geschaltet ist. Am invertierenden Eingang ist die Abgassonde gegen Masse geschaltet. An dem nicht invertierenden Eingang des Operationsverstärkers liegt ein mit R2 bezeichneter Spannungsteiler an. Zwischen dem nicht invertierenden Eingang und dem Ausgang ist ein Differenzverstärker angeordnet, dessen Ausgangssignal gegen Masse das Messsignal ist. Ändert sich der Innenwiderstand oder das Potential an der Abgassonde, so regelt der Operationsverstärker die an der Abgassonde anliegende Spannung über den als Rückkoppelwiderstand wirkenden Referenzwiderstand R1 wieder nach. Das Signal zwischen dem nicht invertierenden Eingang und dem Ausgang des Operationsverstärkers ist proportional zum Strom, der durch den Sensor fließt, und wird vom Differenzverstärker verstärkt.

Die Schaltung weist ferner einen dreifachen Umschalter S1 auf, mittels dem auf die in Fig. 5 dargestellte Schaltungsanordnung umgeschaltet werden kann. Die in Fig. 5 dargestellte Schaltungsanordnung stellt eine strompolarisierte Spannungsmessung dar, bei der die Sondenkeramik mit einem konstanten Strom beaufschlagbar ist und die sich einstellende Spannung gemessen und ausgewertet werden kann. Die in Fig. 5 dargestellte Schaltungsanordnung unterscheidet sich von der in Fig. 4 dadurch, dass am invertierenden Eingang des Operationsverstärkers der Referenzwiderstand R1 anliegt, wohingegen die Abgassonde nun im Rückkoppelkreis des Operationsverstärkers angeordnet ist. Am nicht invertierenden Eingang liegt der Spannungsteiler R2 an. Der Differenzverstärker verstärkt in diesem Falle die über der Abgassonde abfallende Spannung, welche als Meßsignal ausgewertet wird. Bei dieser Schaltung wird der Abgassonde ein Strom aufgeprägt, der nur durch die mittels des Spannungsteilers, d.h. mittels des Potenziometers R2 eingestellte Spannung und durch den Widerstand R1 bestimmt wird. Da die Abgassonde in der Rückkopplung des Operationsverstärkers liegt, hat der Innenwiderstand der Abgassonde keinen Einfluß auf den eingeprägten Strom. Der Spannungsabfall über die Abgassonde wird mit Hilfe des Differenzverstärkers gemessen.

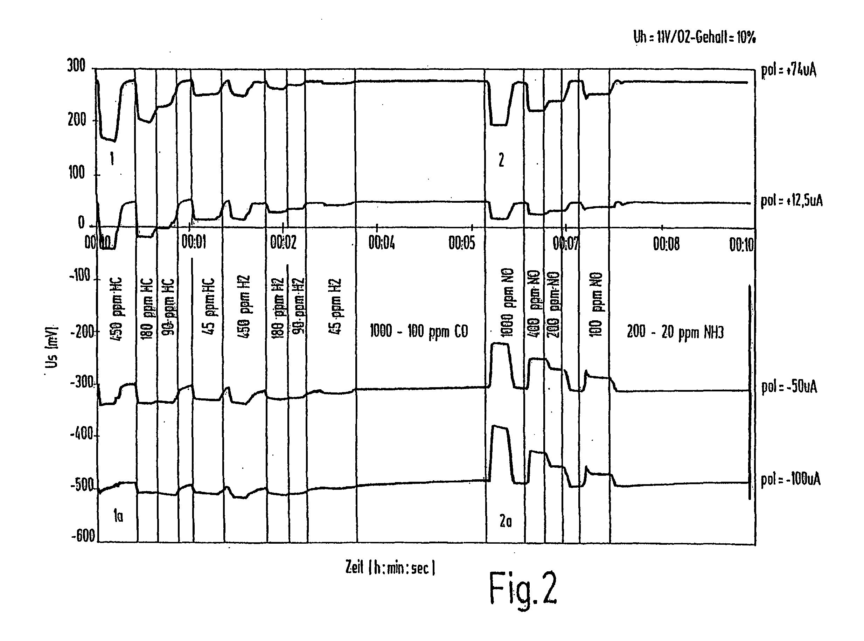

Als Beispiel sind in Fig. 2 die mittels einer spannungspolarisierten Strommessung (siehe Fig. 4) bei einer Polarisationsspannung von +290mV die erfaßten Mischpotentiale von Kohlenwasserstoffen (450-45ppm) (Bezugszeichen 1) sowie die Mischpotentiale von Stickoxiden (Bezugszeichen 2) dargestellt.

Wird die Elektrode negativ polarisiert, sinkt die Signalamplitude der Kohlenwasserstoff-Mischpotenzialbildungen mit zunehmender negativer Polarisierung (Bezugszeichen la). Das Stickoxid-Signal sinkt zunächst mit fallender Polarisationsspannung, kehrt sich um und steigt dann mit zunehmender negativer Polarisationsspannung auf 100mV bei einer Polarisationsspannung von -500mV (Bezugszeichen 2a).

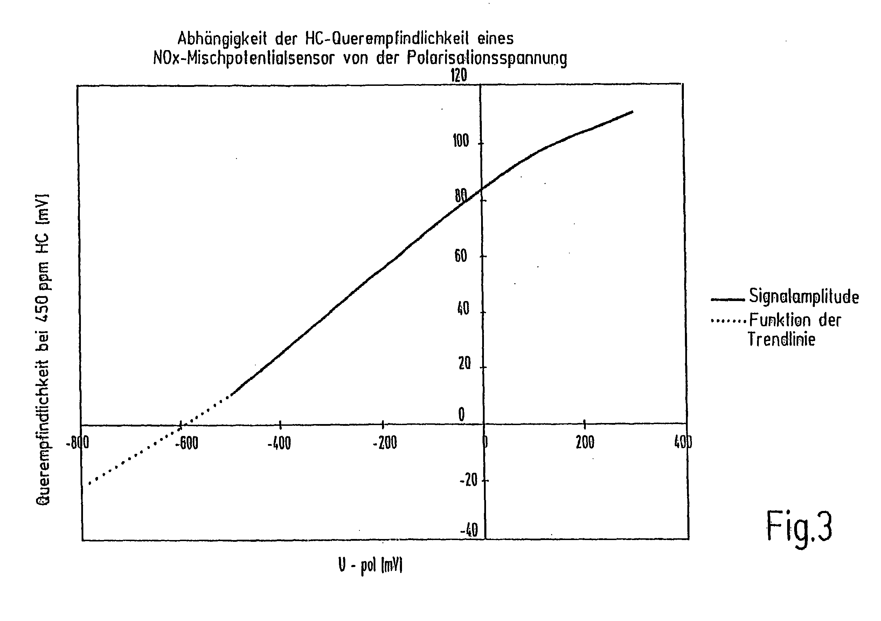

In Fig. 3 ist die Amplitude der Kohlenwasserstoff-Mischpotenzialbildungen (Querempfindlichkeit) gegen die Pump- oder Polarisationsspannung aufgetragen.

Wie aus Fig. 3 ersichtlich, ist bei einer Pumpspannung von -600mV keine Kohlenwasserstoff-Querempfindlichkeit vorhanden, so dass eine Messung lediglich des NOx-Anteils möglich ist.

## Patentansprüche

1. Schaltungsanordnung zum Betreiben einer Mischpotenzial-Abgassonde für eine Brennkraftmaschine, **gekennzeichnet durch** einen invertierenden Operationsverstärker, an dessen nichtinvertierendem Eingang ein Spannungsteiler (R2), an dessen invertierendem Eingang die Abgassonde und in dessen Rückkoppelkreis ein Referenzwiderstand (R1) angeordnet sind und einen Differenzverstärker, der die Spannungsdifferenz zwischen dem nicht invertierenden Eingang und dem Ausgang des Operationsverstärkers verstärkt und als Messsignal ausgibt.

2. Schaltungsanordnung zum Betreiben einer Mischpotenzial-Abgassonde für eine Brennkraftmaschine **gekennzeichnet durch** einen nicht invertierenden Operationsverstärker, an dessen nicht invertierendem Eingang ein Spannungsteiler (R2), an dessen invertierendem Eingang ein Referenzwiderstand (R1) und in dessen Rückkoppelkreis die Abgassonde angeordnet sind und einen Differenzverstärker, der die Spannungsdifferenz an dem Sensor verstärkt und als das Messsignal ausgibt.

3. Schaltungsanordnung nach Anspruch 1 oder 2, **dadurch gekennzeichnet, dass** ein Schaltmittel vorgesehen ist, durch welches die Schaltungsanordnung zur spannungspolarisierten Strommessung in die Schaltungsanordnung zur strompolarisierten Spannungsmessung umschaltbar ist.

## Claims

1. Circuit configuration for operating a mixed potential exhaust sensor for an internal combustion engine, **characterized by** an inverting operational amplifier, at the non-inverting input of which a voltage divider (R2) is arranged, at the inverting input of which the exhaust sensor is arranged, and in the feedback circuit of which a reference resistor (R1) is arranged, and by a differential amplifier which amplifies the voltage difference between the non-inverting input and the output of the operational amplifier and outputs it as a measurement signal.

2. Circuit configuration for operating a mixed potential exhaust sensor for an internal combustion engine, **characterized by** a non-inverting operational amplifier, at the non-inverting input of which a voltage divider (R2) is arranged, at the inverting input of which a reference resistor (R1) is arranged, and in the feedback circuit of which the exhaust sensor is arranged, and by a differential amplifier which amplifies the voltage difference at the sensor and outputs it as the measurement signal.

3. Circuit configuration according to Claim 1 or 2, **characterized in that** a switching means is provided which can switch the circuit configuration for voltage-polarized current measurement into the circuit configuration for current-polarized voltage measurement.

## Revendications

1. Ensemble de circuit destiné à alimenter une sonde de gaz d'échappement à potentiel mixte pour moteur à combustion interne, **caractérisé par** un amplificateur opérationnel inversant qui présente un diviseur de tension (R2) sur son entrée non inversante, la sonde de gaz d'échappement sur son entrée inversante et une résistance de référence (R1) sur sa boucle de rétroaction, et par un amplificateur différentiel qui amplifie la différence de tension entre l'entrée non inversante et la sortie de l'amplificateur opérationnel et la délivre comme signal de mesure.

2. Ensemble de circuit destiné à alimenter une sonde de gaz d'échappement à potentiel mixte pour moteur à combustion interne, **caractérisé par** un amplificateur opérationnel non inversant qui présente un diviseur de tension (R2) sur son entrée non inversante, une résistance de référence (R1) sur son entrée inversante et la sonde de gaz d'échappement dans sa boucle de régulation, et par un amplificateur différentiel qui amplifie la différence de tension aux bornes du détecteur et la délivre comme signal de mesure.

3. Ensemble de circuit selon les revendications 1 ou 2, **caractérisé en ce qu'**il présente un moyen de commutation par lequel l'ensemble de circuit peut être commuté d'un ensemble de circuit pour la mesure d'un courant sous tension de polarisation à un ensemble de circuit pour la mesure d'une tension sous courant de polarisation.
